# FASCICULE DE BREVET EUROPEEN

(11) **EP 2 582 576 B1**
(45) Date de publication et mention de la délivrance du brevet: **06.04.2016**
(21) Numéro de dépôt: 11735458.9
(22) Date de dépôt: 08.06.2011
(51) Int. Cl.: B64C 11/44, B64D 41/00

(54) **ALIMENTATION ELECTRIQUE DES EQUIPEMENTS PORTES PAR LE ROTOR D'UN MOTEUR D'AERONEF**
STROMVERSORGUNG FÜR DIE VOM TRIEBWERKSROTOR GETRAGENEN GERÄTE
ELECTRIC POWER FEED FOR THE SYSTEMS CARRIED BY TURBOSHAFT ROTOR

(30) Priorité: 15.06.2010 FR 1054711
(43) Date de publication de la demande: 24.04.2013
(73) Titulaire: Labinal Power Systems, 31700 Blagnac (FR)
(72) Inventeur: DE WERGIFOSSE, Eric, F-77515 Saint Augustin (FR); DUVAL, Cédric, F-77920 Samois Sur Seine (FR)
(74) Mandataire: Delumeau, François Guy
(86) Numéro de dépôt international: PCT/FR2011/051301
(87) Numéro de publication internationale: WO 2011/157924

(56) Documents cités:
- EP-A2- 2 128 403
- EP-A2- 2 163 474
- GB-A- 525 452
- GB-A- 2 016 598
- GB-A- 2 461 786
- US-A- 4 591 313
- US-A- 5 281 094

## Description

### Arrière-plan de l'invention

L'invention concerne l'alimentation en énergie électrique des équipements électriques portés par le rotor d'un moteur d'aéronef, comme montré dans le document EP 2 163 474.

Le domaine d'application de l'invention est plus particulièrement celui des moteurs d'avion, notamment des moteurs à turbine à gaz. En particulier, l'invention se rapporte à un moteur à soufflante non-carénée, comprenant deux rotors contrarotatifs, chacun portant des pales orientables.

Il existe des moteurs dans lequel le rotor porte des pales orientables. L'orientation des pales peut être modifiée en vol pour permettre un fonctionnement optimisé du moteur. C'est notamment le cas des moteurs du type moteur à soufflante non-carénée (« Open Rotor » en anglais), comprenant deux rotors contrarotatifs, chacun portant des pales orientables. Par exemple, l'orientation des pales peut être modifiée par un actionneur électromécanique porté par le rotor.

Pour alimenter un tel actionneur, de l'énergie électrique doit être transmise vers le rotor. Pour cela, on utilise typiquement un dispositif à balais. Toutefois, les dispositifs à balais sont généralement peu fiables et sujets à une usure rapide. Ils nécessitent donc une maintenance régulière. De plus, ils sont généralement lourds et encombrants, et peuvent poser des problèmes de compatibilité avec les huiles environnantes.

Pour résoudre ces problèmes, le document FR 2 712 250 propose d'utiliser un moteur électrique dont le stator est fixe et dont le rotor ne possède aucune liaison électrique avec le stator et est solidaire d'une roue dentée reliée mécaniquement aux pales à orienter. Cette solution impose donc une liaison mécanique entre le moteur électrique et les pales. La partie fixe du moteur électrique ne peut donc pas être positionnée librement, ce qui implique des contraintes de conception. De plus, aucune énergie électrique n'est disponible au rotor pour alimenter un équipement électrique. Le même document propose donc aussi d'utiliser un transformateur tournant permettant d'alimenter un verrou.

Lorsque la puissance à transmettre est élevée, un transformateur tournant est généralement un dispositif lourd et encombrant. De plus, il est nécessaire de l'alimenter à partir d'une source dont la puissance correspond à la puissance requise au rotor. Ainsi, un convertisseur de puissance et une source d'énergie dimensionnée pour une puissance élevée sont nécessaires.

### Objet et résumé de l'invention

L'invention vise à fournir un moteur d'aéronef à pales orientables, qui ne présente pas au moins certains des inconvénients de l'art antérieur précité. En particulier, un but de l'invention est de permettre de transmettre de l'énergie électrique vers les rotors d'un moteur à rotors contrarotatifs, de manière fiable et sans nécessiter un dispositif lourd et encombrant.

A cet effet, l'invention propose un moteur d'aéronef comprenant :
- un stator,
- un arbre principal, un premier rotor et un deuxième rotor,
- un mécanisme de transmission apte à convertir une rotation de l'arbre principal en une rotation du premier rotor dans un premier sens et en une rotation du deuxième rotor dans un deuxième sens opposé audit premier sens,
- au moins un premier équipement électrique porté par le premier rotor et au moins un deuxième équipement électrique porté par le deuxième rotor, caractérisé par le fait qu'il comprend :
- au moins un premier enroulement inducteur porté par le stator,
- une unité de régulation apte à faire circuler un courant électrique continu dans ledit premier enroulement inducteur, et
- au moins un premier enroulement induit porté par le premier rotor et relié audit premier équipement électrique et au moins un deuxième enroulement induit porté par le deuxième rotor et relié audit deuxième équipement électrique,
- ledit premier enroulement inducteur étant disposé entre le premier enroulement induit et le deuxième enroulement induit dans une position de l'arbre principal.

Grâce à ces caractéristiques, il n'est pas nécessaire d'utiliser un dispositif à balais pour transmettre de la puissance vers le rotor. En effet, le premier enroulement inducteur forme, avec le premier enroulement induit et/ou avec le deuxième enroulement induit, une génératrice synchrone produisant de la puissance électrique disponible au rotor.

En outre, le premier enroulement inducteur est commun aux enroulements induits, ce qui limite l'encombrement.

Le premier enroulement inducteur peut présenter un axe orienté parallèlement à l'axe de rotation de l'arbre principal.

Selon un autre mode de réalisation non couvert par les revendications, le moteur comprend au moins un deuxième enroulement inducteur porté par le stator, et dans lequel, pour une position de l'arbre principal, le premier enroulement inducteur fait face au premier enroulement induit et le deuxième enroulement inducteur fait face au deuxième enroulement induit.

Dans ce cas, le premier enroulement inducteur et le premier enroulement induit forment une génératrice synchrone produisant de la puissance électrique disponible au premier rotor. De manière correspondante, le deuxième enroulement inducteur et le deuxième enroulement induit forment une génératrice synchrone produisant de la puissance électrique disponible au deuxième rotor. L'unité de régulation peut adapter le courant continu de chaque génératrice indépendamment, en fonction de la puissance électrique à produire pour chaque rotor.

Le premier enroulement inducteur et le deuxième enroulement inducteur peuvent être situés l'un à côté de l'autre selon une direction axiale. Le premier enroulement inducteur et le deuxième enroulement inducteur peuvent aussi être situés à même distance de l'arbre principal selon une direction radiale.

Cela permet de limiter l'encombrement des enroulements dans une direction radiale.

Selon une variante non couverte par les revendications, le premier enroulement inducteur et le deuxième enroulement inducteur sont situés au même endroit selon une direction axiale et à une distance différente de l'arbre principal selon une direction radiale.

Cette disposition permet de limiter l'encombrement selon une direction axiale.

Selon un mode de réalisation, ledit au moins un premier équipement électrique comprend un premier actionneur électromécanique apte à modifier l'orientation d'une pale portée par le premier rotor, et ledit au moins un deuxième équipement électrique comprend un deuxième actionneur électromécanique apte à modifier l'orientation d'une pale portée par le deuxième rotor.

Ledit au moins un premier équipement électrique peut comprendre un premier dispositif antigivre, et ledit au moins un deuxième équipement électrique peut comprendre un deuxième dispositif antigivre.

Selon un mode de réalisation non couvert par les revendications, le moteur comprend au moins un deuxième enroulement inducteur porté par le premier rotor et relié audit premier enroulement induit. Pour une position de l'arbre principal, le deuxième enroulement inducteur fait face au deuxième enroulement induit.

Dans ce mode de réalisation, le deuxième enroulement inducteur et le deuxième enroulement induit forment une machine électrique produisant de l'énergie au deuxième rotor, sans nécessiter d'enroulement inducteur supplémentaire au stator.

### Brève description des dessins

L'invention sera mieux comprise à la lecture de la description faite ci-après, à titre indicatif mais non limitatif, en référence aux dessins annexés, sur lequel :
- la figure 1 est une vue en perspective d'un moteur d'aéronef,
- la figure 2 est une vue en coupe partielle du moteur de la figure 1, selon un mode de réalisation non couvert par les revendications,
- les figures 3 à 7 sont des vues similaires à la figure 2, représentant d'autres modes de réalisation, les modes de réalisation des figures 3, 4a, 6 et 7 n'étant pas couverts par les revendications.

### Description détaillée de modes de réalisation

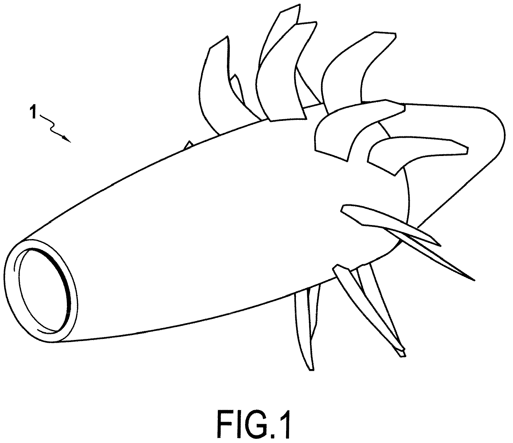

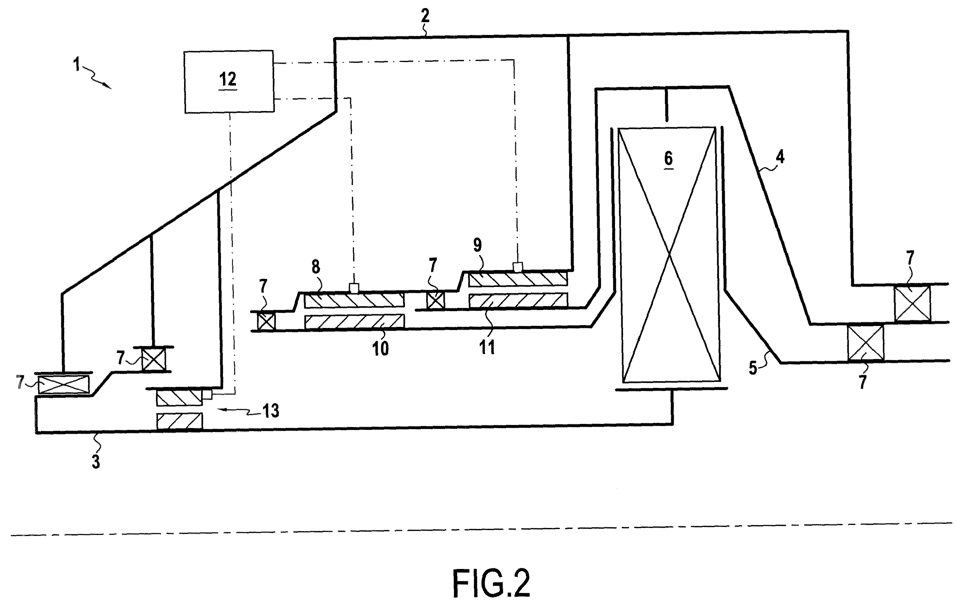

La figure 1 représente une vue en perspective d'un moteur 1 d'aéronef, représenté de manière très schématique. Le moteur 1 est un moteur du type soufflante non-carénée présentant deux rotors contrarotatifs. Chaque rotor porte des pales orientables. La vue de la figure 2 représente schématiquement la partie du moteur 1 au niveau d'un

Selon un mode de réalisation, ledit au moins un premier équipement électrique comprend un premier actionneur électromécanique apte à modifier l'orientation d'une pale portée par le premier rotor, et ledit au moins un deuxième équipement électrique comprend un deuxième actionneur électromécanique apte à modifier l'orientation d'une pale portée par le deuxième rotor.

Ledit au moins un premier équipement électrique peut comprendre un premier dispositif antigivre, et ledit au moins un deuxième équipement électrique peut comprendre un deuxième dispositif antigivre.

Selon un mode de réalisation, le moteur comprend au moins un deuxième enroulement inducteur porté par le premier rotor et relié audit premier enroulement induit. Pour une position de l'arbre principal, le deuxième enroulement inducteur fait face au deuxième enroulement induit.

Dans ce mode de réalisation, le deuxième enroulement inducteur et le deuxième enroulement induit forment une machine électrique produisant de l'énergie au deuxième rotor, sans nécessiter d'enroulement inducteur supplémentaire au stator.

### Brève description des dessins

L'invention sera mieux comprise à la lecture de la description faite ci-après, à titre indicatif mais non limitatif, en référence aux dessins annexés, sur lequel :
- la figure 1 est une vue en perspective d'un moteur d'aéronef selon un mode de réalisation de l'invention,
- la figure 2 est une vue en coupe partielle du moteur de la figure 1,

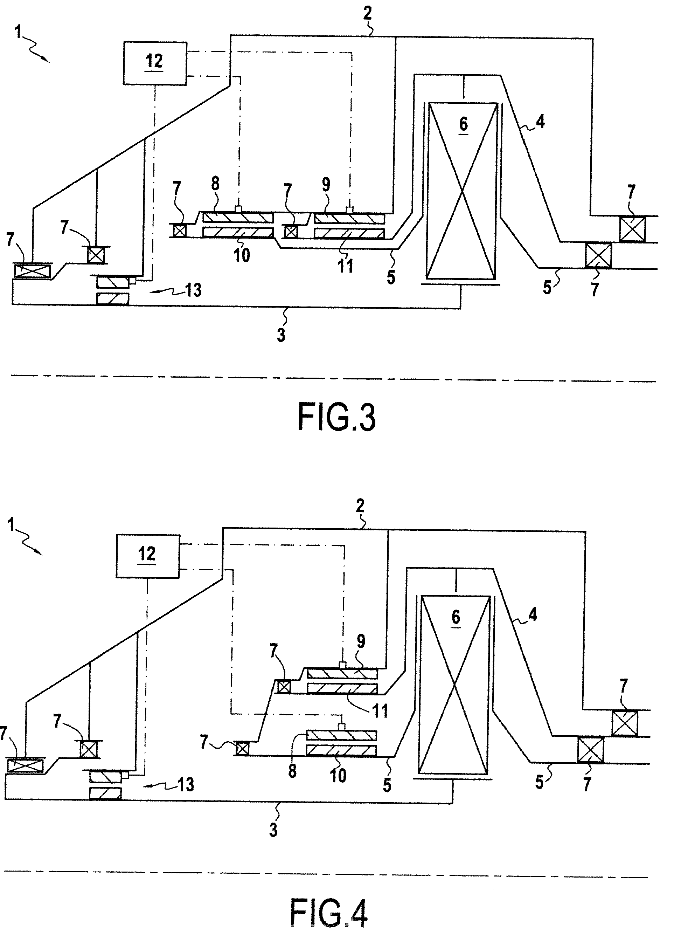

- les figures 3 à 7 sont des vues similaires à la figure 2, représentant d'autres modes de réalisation.

### Description détaillée de modes de réalisation

La figure 1 représente une vue en perspective d'un moteur 1 d'aéronef, représenté de manière très schématique. Le moteur 1 est un moteur du type soufflante non-carénée présentant deux rotors contrarotatifs. Chaque rotor porte des pales orientables. La vue de la figure 2 représente schématiquement la partie du moteur 1 au niveau d'un mécanisme de transmission (« Power Gear Box » en anglais) permettant de convertir la rotation d'un arbre principal en une rotation des rotors dans deux sens opposés.

Le moteur 1 comprend un carter 2 sur lequel est fixé un stator, et un arbre principal 3 entraîné en rotation, par exemple par une turbine à gaz (non représentée). Le moteur 1 comprend également un rotor 4 et un rotor 5. Des paliers 7 permettent la rotation de l'arbre principal 3 et des rotors 4 et 5 par rapport au carter 2.

Un mécanisme de transmission 6 relie l'arbre principal 3 au rotor 4 et au rotor 5. Plus précisément, lorsque l'arbre principal 3 tourne dans un premier sens, le mécanisme de transmission 6 entraîne le rotor 5 dans le même premier sens et le rotor 4 dans un deuxième sens opposé. Le mécanisme de transmission 6 réduit également la vitesse de rotation. Ainsi, par exemple, pour une vitesse de rotation typique de l'arbre principal 3 de + 6000 tr/min, le rotor 5 tourne à une vitesse de +900 tr/min et le rotor 4 tourne à une vitesse de -900 tr/min.

Le rotor 4 porte des pales orientables (non représentées). Un actionneur électromécanique (non représenté) porté par le rotor 4 permet de modifier l'orientation de ces pales. Le rotor 4 porte également un dispositif antigivre (non représenté) comprenant des résistances électriques intégrées aux pales. De manière correspondante, le rotor 5 porte des pales orientables, un actionneur électromécanique et un dispositif antigivre. En variante, les rotors 4 et 5 portent des pales non-orientables.

On décrit maintenant les éléments qui permettent l'alimentation électrique des équipements électriques portés par les rotors 4 et 5, à savoir les actionneurs électromécaniques et les dispositifs antigivre précités.

La figure 2 représente un enroulement inducteur 8 porté par le stator du carter 2 et un enroulement induit 10 porté par le rotor 5. Dans la position représentée de l'arbre principal 3, l'enroulement inducteur 8 et l'enroulement induit 10 se font face. L'enroulement induit 8 est relié aux équipements électriques portés par le rotor 5. De manière correspondante, le stator du carter 2 porte un enroulement inducteur 9 faisant face à un enroulement induit 11 porté par le rotor 4. L'enroulement induit 11 est relié aux équipements électriques portés par le rotor 4.

En pratique, chacun des enroulements inducteurs 8 et 9 et des enroulements induits 10 et 11 fait partie d'un ensemble d'enroulements respectif, répartis de manière circonférentielle. Ci-dessous, lorsqu'on fait référence à un enroulement, il faut comprend qu'on désigne l'ensemble d'enroulements dont il fait partie.

Une unité de régulation 12 est reliée aux enroulements inducteurs 8 et 9. L'unité de régulation 12 est alimentée par une génératrice 13 à aimants permanents montée sur l'arbre principal 3 et sur le carter 2. En complément ou à la place de d'alimentation par la génératrice 13, l'unité de régulation 12 peut être alimentée depuis un réseau électrique de bord de l'aéronef.

On décrit maintenant le fonctionnement du moteur 1.

Lorsque l'arbre principal 3 du moteur 1 tourne, il entraîne la rotation des rotors 4 et 5. Ainsi, les enroulements induits 10 et 11 tournent et passent face aux enroulements inducteurs 8 et 9. L'unité de régulation 12 est alimentée à partir de la génératrice 13 et/ou du réseau de bord, et alimente les enroulements inducteurs 8 et 9 en courant continu.

En raison des champs magnétiques générés par les enroulements inducteurs 8 et 9 et de la rotation des rotors 4 et 5, une tension électrique est générée dans les enroulements induits 10 et 11. Autrement dit, l'enroulement inducteur 8 et l'enroulement induit 10 forment une génératrice synchrone produisant une tension alternative disponible au rotor 5. De manière correspondante, l'enroulement inducteur 9 et l'enroulement induit 11 forment une génératrice synchrone produisant une tension alternative disponible au rotor 4. L'unité de régulation 12 peut adapter les amplitudes des tensions et courants continus dans les enroulements inducteurs 8 et 9 pour que les puissances disponibles sur les rotors 4 et 5 correspondent aux puissances requises.

Les tensions alternatives produites permettent d'alimenter les équipements électriques portés par les rotors 4 et 5. Plus précisément, pour chaque rotor, le dispositif antigivre peut présenter une structure simple, comprenant des câbles, des éléments de connexion et des éléments résistifs chauffants. Il peut être alimenté directement à partir des enroulements induits, sans nécessiter d'électronique de puissance portée par le rotor. L'actionneur électromécanique d'orientation des pales peut être alimenté à partir des enroulements induits, à travers un convertisseur de puissance porté par le rotor.

Ainsi, il n'est pas nécessaire d'utiliser des dispositifs à balais pour alimenter les équipements électriques portés par les rotors 4 et 5. De plus, lors de la conception du moteur 1, les enroulements peuvent être positionnés indépendamment des équipements électriques à alimenter et des pales, car la puissance électrique peut être facilement transportée sur les rotors 4 et 5 par câblage.

Il est également possible d'alimenter les équipements électriques portés par les rotors 4 et 5 lorsque le moteur 1 est à l'arrêt, c'est-à-dire lorsque l'arbre principal 3 et les rotors 4 et 5 ne tournent pas par rapport au carter 2. Pour cela, l'unité de régulation 12 alimente les enroulements inducteurs 8 et 9 par une tension alternative. L'enroulement inducteur 8 et l'enroulement induit 10 forment alors un transformateur transmettant une tension alternative disponible au rotor 5. De manière correspondante, l'enroulement inducteur 9 et l'enroulement induit 11 forment un transformateur qui transmet une tension alternative disponible au rotor 4. Ce mode de fonctionnement en transformateur peut aussi être utilisé à faible vitesse de rotation, lorsque la rotation des rotors 4 et 5 ne permet pas de produire une tension suffisante dans un mode de fonctionnement en générateur synchrone.

Lors du fonctionnement en mode générateur synchrone, les puissances électriques nécessaires sur les rotors 4 et 5 sont essentiellement prélevées sur la rotation de l'arbre principal 3. La puissance électrique que doit fournir l'unité de régulation 12 pour alimenter les enroulements inducteurs 8 et 9 en tension continue n'est pas très élevée.

Par ailleurs, le fonctionnement en mode transformateur peut être essentiellement utilisé pendant les phases de maintenance, lorsque l'avion est au sol, par exemple pour vérifier le bon fonctionnement des actionneurs électromécaniques d'orientation des pales et de l'électronique de puissance associée. Dans ce cas, les forces aérodynamiques exercées sur les pales sont peu élevées. De plus, dans ces situations, l'antigivrage n'est pas utilisé ou utilisé à faible puissance. Ainsi, la puissance électrique que doit fournir l'unité de régulation 12 pour alimenter les enroulements inducteurs 8 et 9 en tension alternative n'est pas très élevée.

On constate que dans les deux modes de fonctionnement, l'unité de régulation 12 ne doit pas fournir une puissance électrique élevée. L'unité de régulation 12 peut donc être dimensionnée pour une puissance électrique faible, ce qui conduit à une masse et un encombrement réduits. L'unité de régulation 12 ne génère donc pas des pertes thermiques élevées et peut être placée dans une zone de l'aéronef offrant de bonnes conditions de fonctionnement, dite « zone contrôlée ».

Les figures 3 à 5 sont des figures similaires à la figure 2 et représentent d'autres modes de réalisation. Sur ces figures, les éléments identiques ou similaires à des éléments de la figure 2 sont désignés par les mêmes références et ne sont plus décrits en détail.

Le mode de réalisation de la figure 3 est presque identique à celui de la figure 2. Sur la figure 3, les enroulements inducteurs 8 et 9 sont situés l'un à côté de l'autre selon une direction axiale, c'est-à-dire une direction parallèle à l'axe de rotation de l'arbre principal 3 et des rotors 4 et 5. Les enroulements inducteurs 8 et 9 sont également situés à même distance de l'arbre principal 3 selon une direction radiale. De même, les enroulements induits 10 et 11 sont situées l'un à côté de l'autre selon une direction axiale, et à même distance de l'arbre principal 3 selon une direction radiale. Par comparaison, sur la figure 2, l'enroulement inducteur 9 et l'enroulement induit 11 sont légèrement plus éloignés de l'arbre principal 3 que l'enroulement inducteur 8 et l'enroulement induit 10, respectivement. Les agencements des figures 2 et 3 permettent de limiter l'encombrement des enroulements selon une direction radiale.

Dans le mode de réalisation de la figure 4, selon une direction axiale, les enroulements inducteurs 8 et 9 et les enroulements induits 10 et 11 sont situés au même endroit. Selon une direction radiale, l'enroulement inducteur 9 et l'enroulement induit 11 sont plus éloignés de l'arbre que l'enroulement inducteur 8 et l'enroulement induit 10. Cet agencement permet de limiter l'encombrement des enroulements dans une direction axiale.

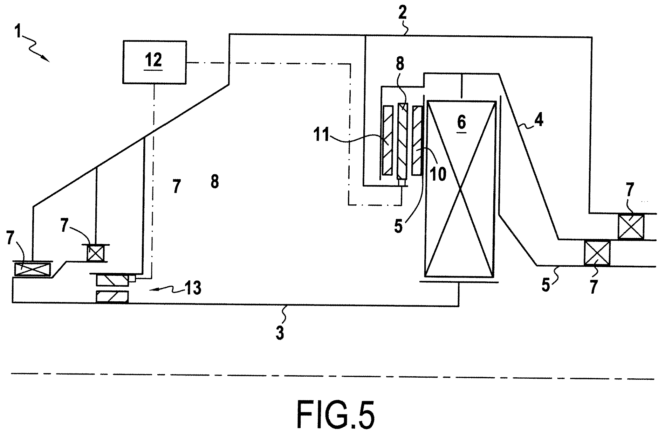

Dans le mode de réalisation de la figure 5, le moteur 1 comprend un enroulement inducteur 8 qui, dans la position représentée de l'arbre principal 3, fait face aux enroulements induits 10 et 11. Autrement dit, l'enroulement inducteur 8 forme, avec l'enroulement induit 10, une première génératrice synchrone et, avec l'enroulement induit 11, une deuxième génératrice synchrone. L'enroulement inducteur 8 est commun aux deux génératrices. En limitant le nombre d'enroulements utilisés, l'agencement de la figure 5 permet de réduire le poids et l'encombrement des enroulements.

Par ailleurs, l'orientation des enroulements sur la figure 5 est différente que sur les figures 2 à 4. Le flux magnétique est généré selon une direction axiale et non radiale. Cette orientation différente permet une occupation de l'espace différente. Le choix de l'orientation permet de tenir compte, lors de la conception du moteur 1, de la place disponible.

Le fonctionnement du mode de réalisation de la figure 5 est sensiblement identique à celui du mode de réalisation de la figure 2. Toutefois, il n'est pas possible de générer une puissance électrique différente pour chaque rotor, comme c'est le cas dans les modes de réalisations précédents où l'unité de régulation 12 peut faire circuler des courants d'amplitudes différentes dans l'enroulement inducteur 8 et dans l'enroulement inducteur 9.

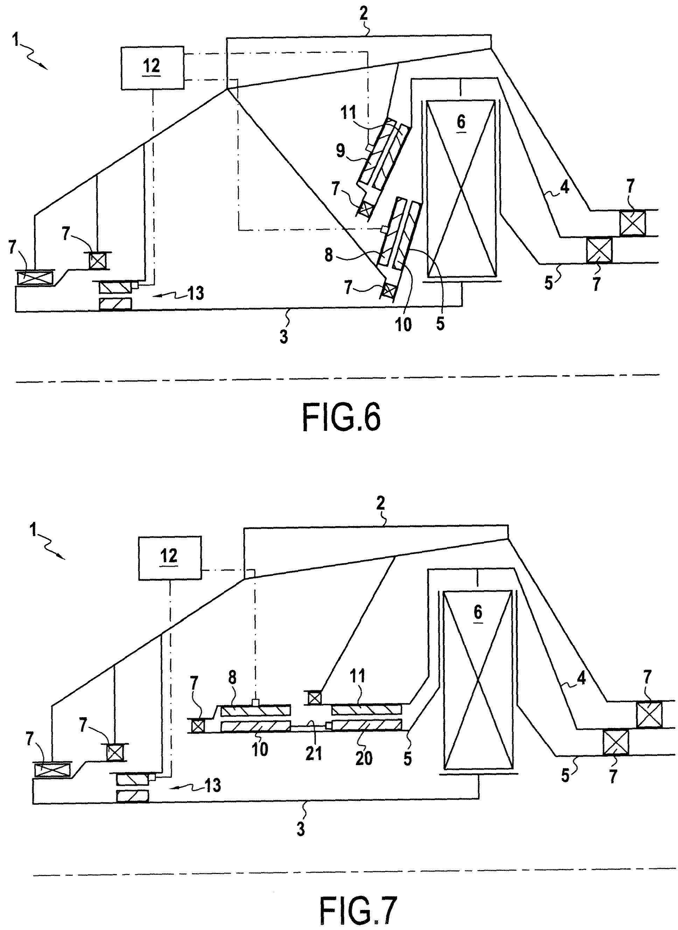

Dans le mode de réalisation de la figure 6, les enroulements 8 à 11 ne sont orienté ni radialement ni axialement par rapport à l'arbre principal 3. Cet agencement permet une intégration spécifique permettant de limiter l'encombrement en tenant compte de contraintes de conception.

Dans le mode de réalisation de la figure 7, le rotor 5 porte un enroulement inducteur 20 relié à l'enroulement induit 10 par une liaison 21. Dans la position représentée, l'enroulement inducteur 20 fait face à l'enroulement induit 11 du rotor 4.

Selon une première variante, la liaison 21 peut comprendre un pont redresseur formé de diodes. Dans ce cas, l'enroulement inducteur 20 est alimenté en courant continu. La rotation relative des rotors 4 et 5 permet la génération d'une puissance électrique dans l'enroulement induit 11.

Selon une autre variante, la liaison 21 peut relier directement l'enroulement induit 10 à l'enroulement inducteur 20. Dans ce cas, l'enroulement inducteur 20 est alimenté en courant alternative et génère un champ magnétique tournant. Le champ tournant et la rotation relative des rotors 4 et 5 permet la génération d'une puissance électrique dans l'enroulement induit 11, selon une vitesse d'entrefer double par rapport à la première variante précitée.

## Revendications

1. Moteur (1) d'aéronef comprenant :
- un stator,
- un arbre principal (3), un premier rotor (5) et un deuxième rotor (4),
- un mécanisme de transmission (6) apte à convertir une rotation de l'arbre principal en une rotation du premier rotor dans un premier sens et en une rotation du deuxième rotor dans un deuxième sens opposé audit premier sens,
- au moins un premier équipement électrique porté par le premier rotor et au moins un deuxième équipement électrique porté par le deuxième rotor, **caractérisé par le fait qu'**il comprend :
- au moins un premier enroulement inducteur (8) porté par le stator,
- une unité de régulation (12) apte à faire circuler un courant électrique continu dans ledit premier enroulement inducteur, et
- au moins un premier enroulement induit (10) porté par le premier rotor (5) et relié audit premier équipement électrique et au moins un deuxième enroulement induit (11) porté par le deuxième rotor (4) et relié audit deuxième équipement électrique,
- ledit premier enroulement inducteur (8) étant disposé entre le premier enroulement induit (10) et le deuxième enroulement induit (11) dans une position de l'arbre principal.

2. Moteur selon la revendication 1, dans lequel ledit premier enroulement inducteur (8) présente un axe orienté parallèlement à l'axe de rotation de l'arbre principal.

3. Moteur selon l'une des revendications 1 et 2, dans lequel ladite unité de régulation est alimentée par une génératrice à aimants permanents (13).

4. Moteur selon l'une des revendications 1 à 3, dans lequel ladite unité de régulation est alimentée par un réseau de bord.

5. Moteur selon l'une des revendications 1 à 4, dans lequel ladite unité de régulation est apte à faire circuler un courant électrique alternatif dans ledit premier enroulement inducteur.

6. Moteur selon l'une des revendications 1 à 5, dans lequel ledit au moins un premier équipement électrique comprend un premier actionneur électromécanique apte à modifier l'orientation d'une pale portée par le premier rotor, et ledit au moins un deuxième équipement électrique comprend un deuxième actionneur électromécanique apte à modifier l'orientation d'une pale portée par le deuxième rotor.

7. Moteur selon l'une des revendications 1 à 6, dans lequel ledit au moins un premier équipement électrique comprend un premier dispositif antigivre, et ledit au moins un deuxième équipement électrique comprend un deuxième dispositif antigivre.

## Patentansprüche

1. Flugzeugtriebwerk (1), umfassend:
- einen Stator,
- eine Hauptwelle (3), einen ersten Rotor (5) und einen zweiten Rotor (4),
- einen Übertragungsmechanismus (6), der geeignet ist, eine Rotation der Hauptwelle in eine Rotation des ersten Rotors in eine erste Richtung und in eine Rotation des zweiten Rotors in eine zu der ersten Richtung entgegengesetzte zweite Richtung umzuwandeln,
- wenigstens eine durch den ersten Rotor getragene erste elektrische Einrichtung und wenigstens eine durch den zweiten Rotor getragene zweite elektrische Einrichtung,
**dadurch gekennzeichnet, dass** es umfasst:
- wenigstens eine durch den Stator getragene erste Primärwicklung (8),
- eine Regelungseinheit (12), die geeignet ist, einen elektrischen Gleichstrom in der ersten Primärwicklung fließen zu lassen, und
- wenigstens eine erste Sekundärwicklung (10), die durch den ersten Rotor (5) getragen und mit der ersten elektrischen Einrichtung verbunden ist sowie wenigstens eine zweite Sekundärwicklung (11), die durch den zweiten Rotor (4) getragen und mit der zweiten elektrischen Einrichtung verbunden ist,
- wobei die erste Primärwicklung (8) zwischen der ersten Sekundärwicklung (10) und der zweiten Sekundärwicklung (11) in einer Position der Hauptwelle angeordnet ist.

2. Triebwerk nach Anspruch 1, wobei die erste Primärwicklung (8) eine zu der Rotationsachse der Hauptwelle parallel ausgerichtete Achse aufweist.

3. Triebwerk nach einem der Ansprüche 1 und 2, wobei die Regelungseinheit durch einen Dauermagnetgenerator (13) gespeist wird.

4. Triebwerk nach einem der Ansprüche 1 bis 3, wobei die Regelungseinheit durch ein Bordnetz gespeist wird.

5. Triebwerk nach einem der Ansprüche 1 bis 4, wobei die Regelungseinheit geeignet ist, einen elektrischen Wechselstrom in der ersten Primärwicklung fließen zu lassen.

6. Triebwerk nach einem der Ansprüche 1 bis 5, wobei die wenigstens eine erste elektrische Einrichtung einen ersten elektromechanischen Aktor umfasst, der geeignet ist, die Ausrichtung einer durch den ersten Rotor getragenen Schaufel zu ändern, und die wenigstens eine zweite elektrische Einrichtung einen zweiten elektromechanischen Aktor umfasst, der geeignet ist, die Ausrichtung einer durch den zweiten Rotor getragenen Schaufel zu ändern.

7. Triebwerk nach einem der Ansprüche 1 bis 6, wobei die wenigstens eine erste elektrische Einrichtung eine erste Vereisungsschutzvorrichtung umfasst und die wenigstens eine zweite elektrische Einrichtung eine zweite Vereisungsschutzvorrichtung umfasst.

## Claims

1. An aircraft engine (1) comprising:
- a stator,
- a main shaft (3), a first rotor (5) and a second rotor (4),
- a transmission mechanism (6) capable of converting rotation of the main shaft into rotation of the first rotor in a first direction and into rotation of the second rotor in a second direction opposite said first direction,
- at least one first electrical device carried by the first rotor and at least one second electrical device carried by the second rotor,
**characterised in that** it comprises:
- at least one first field winding (8) carried by the stator,
- a control unit (12) capable of causing direct electric current to flow in said first field winding, and
- at least one first armature winding (10) carried by the first rotor (5) and connected to said first electrical device and at least one second armature winding (11) carried by the second rotor (4) and connected to said second electrical device, said first field winding (8) being disposed between the first armature winding (10) and the second armature winding (11) in one position of the main shaft.

2. The engine according to Claim 1, in which said first field winding (8) has an axis oriented parallel to the axis of rotation of the main shaft.

3. The engine according to any one of Claims 1 and 2, in which said control unit is fed by a permanent magnet generator (13).

4. The engine according to any one of Claims 1 to 3, in which said control unit is fed by an onboard network.

5. The engine according to any one of Claims 1 to 4, in which said control unit is capable of causing alternating electric current to flow in said first field winding.

6. The engine according to any one of Claims 1 to 5, in which said at least first electrical device comprises a first electromechanical actuator capable of modifying the orientation of a blade carried by the first rotor, and said at least one second electrical apparatus comprises a second electromechanical actuator capable of modifying the orientation of a blade carried by the second rotor.

7. The engine according to any one of Claims 1 to 6, in which said at least one first electrical device comprises a first anti-icing device, and said at least one second electrical device comprises a second anti-icing device.
